# EUROPÄISCHE PATENTANMELDUNG

(11) **EP 0 771 644 A2**
(43) Veröffentlichungstag der Anmeldung: **07.05.1997**
(21) Anmeldenummer: 96116995.0
(22) Anmeldetag: 23.10.1996
(51) Int. Cl.: B32B 27/40, B32B 9/02

(54) **Unter Einsatz von Recycling-Polyolen hergestellte Polyurethan-Verbundkörper(Sandwichelemente), ein Verfahren zu deren Herstellung sowie deren Verwendung**

(30) Priorität: 03.11.1995 DE 19540949
(71) Anmelder: BAYER AG, 51368 Leverkusen (DE); Bayerische Motoren Werke Aktiengesellschaft, 80788 München (DE)
(72) Erfinder: Rasshofer, Werner, Dr., 51061 Köln (DE); Lammeck, Adolf, 53797 Lohmar (DE); Glasder, Andreas, 84174 Eching (DE)
(74) Vertreter: Pettrich, Klaus-Günter

(57) **Zusammenfassung**

Beschrieben werden Verbundkörper (Sandwichelemente) mit einem Polyurethan-Kern und mindestens einer Deckschicht aus einem faserverstärkten Kunststoffmaterial, wobei der Verbundkörper
a) einen Polyurethan-Kern aus der chemischen Umsetzung von Polyisocyanaten mit durch chemische Spaltung von Polyurethan- und/oder Polyharnstoffabfällen gewonnenen Polyolverbindungen mit einer OH-Zahl im Bereich von 100 bis 500 mg KOH/g, einem Wassergehalt von 0 bis 5 Gew.-% und einer Viskosität von mehr als 2 000 mPa·s (20°C) und
b) mindestens eine Deckschicht aus mit Naturfasern verstärkten Kunststoffmaterial enthält.

Ebenfalls beschrieben wird die Herstellung dieser Verbundkörper sowie deren Verwendung im Fahrzeug-, Möbel-, Maschinen- oder Apparatebau. Bevorzugt werden diese Sandwichelemente im Fahrzeugbau, insbesondere als Formteile im Fahrzeuginnenraum, eingesetzt.

## Beschreibung

Die Erfindung betrifft Polyurethan-Verbundkörper (Sandwichelemente), welche unter Verwendung von Recycling-Polyolen hergestellt werden, ein Verfahren zu deren Herstellung sowie deren Verwendung im Fahrzeug-, Möbel-, Maschinen- und Apparatebau.

Verbundkörper mit einem Polyurethan-Kern und faserverstärkten Deckschichten aus einem anderen Material werden in weiten Teilen der Technik, z.B. für die Fertigung hochwertiger Strukturbauteile für den Kfz-Fahrzeug- und Karosseriebau, insbesondere den Fahrzeuginnenraum, eingesetzt. Der Stand der Technik kennt dabei im wesentlichen zwei Verfahren zur Herstellung derartiger Sandwichelemente. Im Depotverfahren (Füllbauweise) werden zwei Halbschalen (Deckschichten) vorgefertigt, in ein Werkzeug eingelegt und der Hohlraum zwischen den Schalen mit einem PUR-Schaum ausgeschäumt. Weiter kennt man die Hüllbauweise, bei der ein Kern aus einem PUR-Schaum in einem Werkzeug vorgelegt und mit einem geeigneten Hüllmaterial aus z.B. faserverstärkten Kunststoffen wie Epoxyharzen oder ungesättigten Polyesterharzen umhüllt wird.

Bei der Herstellung von Sandwichelementen mit einem Polyurethan-Kern sind aus Polyurethan- oder Polyharnstoffabfällen zurückgewonnene Polyolverbindungen bisher kaum eingesetzt worden.

Es bestand daher die Aufgabe, ein Verfahren zur Herstellung von Verbundkörpern mit einem Polyurethan-Kern zur Verfügung zu stellen, bei dem aus Polyurethan- oder Polyharnstoffabfällen zurückgewonnene Polyolverbindungen eingesetzt werden können.

Es wurde nun gefunden, daß auch mit aus Polyurethan- oder Polyharnstoffabfällen zurückgewonnenen Polyolverbindungen hochwertige Verbundkörper erhalten werden können, wenn diese eingesetzten Polyolverbindungen bestimmte Spezifikationen erfüllen und wenn mit Naturfasern verstärkte Deckschichten eingesetzt werden.

Gegenstand der Erfindung sind daher Verbundkörper mit einem Polyurethan-Kern und mindestens einer Deckschicht aus einem faserverstärkten Kunststoffmaterial, wobei der Verbundkörper
a) einen Polyurethan-Kern aus der chemischen Umsetzung von Polyisocyanaten mit durch chemische Spaltung von Polyurethan- und/oder Polyharnstoffabfällen gewonnenen Polyolverbindungen mit einer OH-Zahl im Bereich von 100 bis 500 mg KOH/g, einem Wassergehalt von 0 bis 5 Gew.-% und einer Viskosität von mehr als 2000 mPa·s (20°C) und
b) mindestens eine Deckschicht aus mit Naturfasern verstärkten Kunststoffmaterial enthält.

Es ist überraschend, daß sich mit Polyolverbindungen dieser Spezifikation überhaupt hochwertige Polyurethan-Kerne für Sandwichelemente herstellen lassen, da nach dem bisher bekannten Stand der Technik immer Polyole mit einer weit höheren OH-Zahl, meist im Bereich von 300 bis 1 000, und einer wesentlich niedrigeren Viskosität, meist im Bereich von <2 000 mPa.s (20°C), eingesetzt werden mußten. Diese Spezifikation wird immer erreicht, indem man die durch chemische Spaltung von Polyurethan- oder Polyharnstoffabfällen gewonnenen Recycling-Polyole durch nachfolgend näher benannte Zusatzmittel auf die angegebene Spezifikation einstellt.

Die erfindungsgemäßen Verbundkörper liegen als Sandwichbauteile vor, die neben einem Polyurethan-Kern auf Basis der Recycling-Polyole mindestens eine weitere mit Naturfasern verstärkte Deckschicht aus einem Kunststoffmaterial, vorzugsweise Epoxyharzen oder ungesättigten Polyesterharzen, enthalten. Bevorzugt besteht die Deckschicht aus faserverstärktem Kunststoffmaterial. Als gebundene Naturfasern kommen dabei alle an sich bekannten faserförmigen Naturfasern, insbesondere Bananen-, Flachs-, Jute-, Hanf-, Sisal- oder Kokosfasern in Form von Wirrfasern, Gewirken, Gestricken oder Geweben in Betracht. Diese Faserstoffe können durch Epoxy-ungesättigte Polyester-, PUR-, Melamin-, Vinylharzen oder auch thermoplastischen Pulvern verstärkt sein. Diese Bindemittel können durch Sprühen, Walzen, Rakeln und Gießen auf- und eingebracht werden und können im Falle der vorzugsweisen Verwendung von PUR-Harzen ebenfalls auch PUR-Recyclate enthalten.

Zweckmäßigerweise bestehen die erfindungsgemäßen Verbundkörper in Sandwichbauweise aus einer Deck- oder Hüllschicht A, bestehend aus naturfaserverstärktem Kunststoffmaterial, einer Kernschicht B, bestehend aus einem Polyurethanschaum auf Basis der Recycling-Polyole, und gewünschtenfalls aus einer weiteren Schicht, die entweder wie Schicht A aufgebaut ist oder aus einem anderen Material bestehen kann. Dekormaterialien wie Folien, Formhäute, Textilien oder Teppich können anschließend in einem separaten Arbeitsgang oder auch in ein einem einzigen Herstellungsschritt (Onestep-Verfahren) direkt auf den äußeren Oberflächen der Deckschichten in an sich bekannter Weise hinterpreßt werden (Direktkaschierung). Bei multilagigen Sandwichaufbauten können gegebenenfalls auch noch weitere, andere Schichten aus anderen Materialien Verwendung finden.

Als Polyurethan- bzw. Polyharnstoffabfälle zur Herstellung der verwendeten Polyolverbindungen können alle üblichen Umsetzungsprodukte aus der Reaktion zwischen einesn Isocyanat und üblichen Di- und/oder Polyolen, z.B. Polyestern oder Polyethern, dienen.

Ein weiterer Gegenstand der Erfindung ist ein Verfahren zur Herstellung von Verbundkörpern (Sandwichelementen) mit einem Polyurethan-Kern und mindestens einer faserverstärkten Deckschicht durch Umsetzung von Polyisocyanaten mit Polyolverbindungen sowie gegebenenfalls weiteren Hilfs- und Zusatzstoffen, bei dem man durch chemische Spaltung von Polyurethan- und/oder Polyharnstoffabfällen gewonnene Polyolverbindungen mit einer OH-Zahl im Bereich von 100 bis 500, vorzugsweise 200 bis 450, insbesondere 250 bis 400, einen Wassergehalt von 0 bis 5 Gew.-%, vorzugsweise 0,2 bis 2 Gew.-%, insbesondere 0,5 bis 1 Gew.-% und einer Viskosität bei 20°C von mehr als 2000 mPa.s, vorzugsweise 3 000 bis 20000 mPa.s, insbesondere 5 000 bis 10 000 zur Herstellung des Polyurethan-Kerns einsetzt und mindestens eine Deckschicht aus mit Naturfasern verstärktem Kunststoffmaterial in Sandwichbauweise auf diesen Polyurethan-Kern aufträgt.

Im erfindungsgemäßen Verfahren können alle an sich bekannten Hilfs- und Zusatzstoffe wie z.B. Trennmittel, Treibmittel, Füllstoffe, Katalysatoren und Flammschutzmittel eingesetzt werden.

Das erfindungsgemäße Verfahren kann dabei sowohl als Depot- oder Hüllbauverfahren ausgestaltet sein. Sowohl die Depotbauweise als auch die Hüllbauweise sind an sich bekannt. Im Depotverfahren (Füllbauweise) werden zwei Halbschalen (z.B. Deckschichten aus naturfaserverstärkten Kunststoffen) vorgefertigt, in ein Werkzeug eingelegt und der Hohlraum zwischen den Schalen mit dem erfindungsgemäßen PUR-Schaum ausgeschäumt. In der Hüllbauweise wird ein Kern aus erfindungsgemäßem PUR-Schaum in einem Werkzeug vorgelegt und dann mit naturfaserverstärkten Hüllmaterial, z.B. mit naturfaserverstärkten Epoxyharzen oder Polyesterharzen, umhüllt.

Bevorzugt werden die erfindungsgemäßen Verbundkörper mit einem geschäumten PUR-Kern nach der Hüllbauweise unter Verwendung der Recycling-Polyolverbindungen hergestellt. Hierfür können gewünschtenfalls alle an sich üblichen Treibmittel und Hilfsstoffe, z.B. Trennmittel, zugesetzt werden. Wird bei dieser erfindungsgemäßen Herstellung eines PUR-Sandwichformkörpers nach der Hüllbauweise in einem Formwerkzeug kein externes Trennmittel eingesetzt, so wird ein besonders kraftschlüssiger Verbund zwischen Kern- und Hüllmaterial ohne die Notwendigkeit der Nachbearbeitung oder Vorbereitung von Hüll- und/oder Kernschicht erreicht. Als Hüllschicht können dabei alle an sich bekannten naturfaserverstärkten Kunststoffmaterialien verwendet werden.

Die im erfindungsgemäßen Verfahren eingesetzten Polyole können aus beliebigen Polyurethan- bzw. Polyharnstoffabfällen, z.B. auch aus Polyurethan- bzw. Polyharnstoffverbünden durch chemische Spaltung gewonnen werden. Diese Verbundstoffe können aus PUR und anderen Werkstoffen wie z.B. Thermoplasten bestehen, wobei vor dem PUR-Recycling das Nicht-PUR-Material weitgehend abgetrennt werden muß. Ein solcher Verbundstoff kann z.B. eine Kfz-Schalttafel aus einem glasmattenverstärkten PUR-Träger, einem griffweichen PUR-Schaum als Hinterfüllmaterial oder einer aliphatischen PUR-Haut als Dekor- und Abdeckschicht bestehen.

Die Verfahren zur chemischen Aufspaltung von Polyurethan- und/oder Polyharnstoffabfällen in Polyolverbindungen sind alle an sich bekannt. So können die Polyurethan- und/oder Polyharnstoffabfälle z.B. durch Aminolyse-, Alkoholyse- oder Glykolyse-Verfahren erhalten werden. Derartige Verfahren sind nach dem Stand der Technik bereits ausführlich beschrieben (z.B. in W. Raßhofer, Recycling von Polyurethan-Kunststoffen, Hüthig-Verlag, Heidelberg 1994).

Bevorzugt werden die Polyolverbindungen aus Polyurethan- und/oder Polyharnstoffabfällen auf an sich bekannte Weise durch Glykolyse gewonnen. Hierfür werden grobgemahlene oder feinzerkleinerte Polyurethan- oder Polyharnstoffabfälle bei Temperaturen von 160 bis 240°C mit Glykolen, vorzugsweise Diethylenglykol, im Gewichtsverhältnis Abfall : Glykol von 10:1 bis 1:2, bevorzugt 5:1 bis 1:1 umgesetzt. Nach einer Rührzeit von ca. 0,5 bis 10 Stunden erhält man ein flüssiges Produkt mit der folgenden Spezifikation: OH-Zahl im Bereich von 20 bis 1070, Wassergehalt im Bereich von 0 bis 5 Gew.-%, Viskosität bei 20°C im Bereich von >2 000 mPa.s. Bei sehr hohen OH-Zahlen kann die Viskosität auch unter 2000 mPas (20°C) liegen.

Da die aus der chemischen Spaltung der Polyurethan- und/oder Polyharnstoffabfällen gewonnenen Polyolverbindungen üblicherweise in ihren Verarbeitungseigenschaften nicht den für die industrielle Herstellung von Polyurethan-Verbundkörpern geeigneten Anforderungen entsprechen, werden gewöhnlich die angegebenen Spezifikationen durch Zumischen von Zusatzmitteln eingestellt. Üblicherweise werden dafür Gemische aus bekannten Additiven wie Vernetzer, Zellstabilisatoren, Fließhilfsmittel, Trennmittel, Katalysatoren, Treibmittel etc. in einem Mengenverhältnis von 2 bis 50 Gew.-%, bezogen auf die eingesetzte Reaktionsmischung an Recycling-Polyolverbindungen, eingesetzt. Die Zusatzgemische haben üblicherweise OH-Zahlen von 300 bis 1 050 mg KOH/g, Viskositäten von 100 bis 5 000 mPa.s, einen Wassergehalt von 0 bis 10 Gew.-% und Säurezahlen von 0 bis 100 mg KOH/g.

Es ist überraschend, daß durch chemische Spaltung von Polyurethan- und/oder Polyharnstoffabfällen gewonnene Polyole der angegebenen Spezifikation sich überhaupt zur Herstellung hochwertiger Polyurethan-Verbundkörper mit Sandwichstruktur eignen, da üblicherweise bei der Verwendung von Neumaterial die eingesetzten Polyole eine wesentlich höhere OH-Zahl im Bereich von über 500 bis 1 000 aufweisen müssen. Auch die Viskosität der nach dem Stand der Technik eingesetzten Polyolverbindungen liegt üblicherweise wesentlich niedriger, zumeist im Viskositätsbereich von <2 000 mPa.s ((20°C). Daß sich aus Polyurethan- und/oder Polyharnstoffabfällen gewonnene Polyolverbindungen sich trotz ihrer weit höheren Viskosität und wegen ihrer niedrigeren OH-Zahl geringeren Aktivität dennoch gut zu hochwertigen Polyurethan-Verbundkörper verarbeiten lassen, war daher nicht zu erwarten. Die erfindungsgemäßen Polyurethan-Verbundkörper erlauben die Herstellung hochwertiger Strukturbauteile für die unterschiedlichsten Anwendungsbereiche, die unter Beibehaltung der mechanischen Eigenschaften in vorteilhafter Weise den Einsatz von aus Abfallstoffen recycelten Rohstoffen gestatten.

Die aus der chemischen Spaltung der Polyurethan- und/oder Polyharnstoffabfällen gewonnenen Polyole können mit allen an sich bekannten Polyisocyanaten umgesetzt werden. Als Polyisocyanate können z.B. aliphatische, cycloaliphatische, araliphatische, aromatische und heterocyclische Polyisocyanate, wie sie z.B. von W. Siefgen in Justus Liebigs Annalen der Chemie, 362, Seiten 75 bis 136 beschrieben werden, beispielsweise solche der allgemeinen Formel

Q(NCO)ₙ,

in der
- n: 2 bis 5, vorzugsweise 2 bis 3, und
- Q: einen aliphatischen Kohlenwasserstoffrest mit 2 bis 18, vorzugsweise 6 bis 10 Kohlenstoffatomen, einen cycloaliphatischen Kohlenwasserstoffrest mit 4 bis 15, vorzugsweise 5 bis 10 Kohlenstoffatomen, einen aromatischen Kohlenwasserstoffrest mit 6 bis 15, vorzugsweise 6 bis 13 Kohlenstoffatomen bedeuten, z.B. solche Polyisocyanate, wie sie in der DE-OS 2 832 253, Seiten 10 bis 11, beschrieben werden, bedeuten.

Besonders bevorzug werden die technisch leicht zugänglichen Polyisocyanate, z.B. das 2,4- und 2,6-Toluylendiisocyanat, sowie beliebige Gemische dieser Isomeren ("TDI"), Diphenylmethandiisocyanat ("MDI") und Polyphenylpolymethylenpolyisocyanate, wie sie durch Anilin-Formaldehyd-Kondensation und anschließende Phosgenierung hergestellt werden und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. 4,4'- und/oder 2,4'-Diphenylmethandiisocyanat ableiten, eingesetzt.

Ein weiterer Gegenstand der Erfindung ist die Verwendung der vorstehend beschriebenen Polyurethan-Verbundkörper (Sandwichelemente) im Fahrzeug-, Möbel-, Maschinen- und Apparatebau. Vorzugsweise werden die erfindungsgemäßen Polyurethan-Verbundkörper im Fahrzeugbau, insbesondere im Kfz-Innenraum verwendet. Neben einem geringen Gewicht bei einer hohen Festigkeit zeichnen sich die erfindungsgemäßen Sandwich-Bauteile dadurch aus, daß sie durch Verwendung von Polyurethanmaterial als Kern und naturfaserverstärktem Deckschicht-Matrix-Bindematerial einen besonders niedrigen Gehalt an emittierbaren und extrahierbaren Substanzen aufweisen. Im Kfz-Bereich können sie z.B. als 2- und/oder 3-dimensionale Formkörper, wie z.B. als kaschierfähige Verkleidungsteile oder Abdeckungen, Türinnenverkleidungen, Konsolenträger, Armaturentafelträger, Luftleitkanäle, Kabelabdeckungen, Kabelkanäle und Kofferraumauskleidungen verwendet werden. Weiterhin können sie zu Gehäusen und Gehäusedecken, Paletten, Kleinlastträgern, Abdeckungen, senkrechte und waagerechte Strukturbauteilen, Schottwänden, Einlegeböden usw. verarbeitet werden. Auch im Möbelbereich können die erfindungsgemäßen Polyurethan-Formkörper z.B. als Ersatz von Tropenholz, insbesondere in Form von hieraus hergestellten Schichtholzimitaten, verwendet werden.

Die nachfolgenden Beispiele sollen die Erfindung erläutern, ohne sie jedoch in ihrem Umfang zu begrenzen.

### Beispiele

### Beispiel 1

### Chemische Spaltung von Polyurethanabfällen durch Glykolyse

Ein Granulat einer maximalen Korngröße von 8 mm aus glasfaserverstärktem Polyurethanharnstoff der Dichte 1,26 g/cm³ wurde einer Glykolyse unterworfen. Hierfür wurde in einem mit Rührer und Heizmantel ausgestatteten 20 l-Planschlifftopf 4 kg Diethylenglykol vorgelegt, mit Stickstoff überlagert und auf 220°C vorgeheizt. In das heiße Gemisch wurden portionsweise 8 kg Polyurethanharnstoffgranulat unter Stickstoffüberschleierung eingetragen. Die Zugabe wurde so bemessen, daß jederzeit ein rührfähiges Gemisch vorlag. Nach vollständiger Zugabe des Granulats wurde bei 200-210°C 90 min lang gerührt, auf 160°C abgekühlt, dann mit 0,2 kg Acetessigester gemischt, und 1 Stunde bei dieser Temperatur gerührt. Man erhielt ein flüssiges beim Stehen 2-phasiges Produkt an Recycling-Polyolen mit den folgenden Daten:
OH-Zahl = 353 mg KOH/g
NH-Zahl = 33 mg KOH/g
Säure-Zahl = 0,07 mg KOH/g
Viskosität = ca. 20 000 mPa.s (20°C)

### Beispiel 2

### Herstellung eines geschäumten Polyurethan-Kerns für einen erfindungsgemäßen Verbundkörper

Die in Beispiel 1 durch Glykolyse gewonnenen Recycling-Polyole wurden mit einem Zusatzmittelgemisch, das folgende Spezifikation:
OH-Zahl = 400 mg KOH/g
Wassergehalt = 2,6 %
Viskosität = 1 500 mPa.s (20°C)
aufwies, in einer Menge von 25 Gew.-%, bezogen auf die Gesamtmenge, vermischt. Man erhielt eine Polyol-Formulierung der folgenden Spezifikation:
OH-Zahl = ca. 380 mg KOH/g
Wasser-Gehalt = ca. 1 %
Viskosität = ca. 3 500 mPa.s

In an sich bekannter Weise gemäß RIM-Technologie wurde diese Polyol-Formulierung mit Polyisocyanat (Roh-MDI) zu einem geschäumten Polyurethan-Formkörper in an sich bekannter Weise umgesetzt. Ein externes Trennmittel wurde dabei nicht verwendet. Man erhielt einen Polyurethan-Formkörper mit einer Rohdichte von 400 kg/m³.

### Beispiel 3

### Herstellung eines erfindungsgemäßen Verbundkörper (Sandwichelement)

### Beispiel 3a

Zuerst wurden außerhalb des Werkzeuges Kokosfasermatten mit einem Flächengewicht von 600 g/m² in an sich bekannter Weise mit einem PUR-Matrixmaterial (Baypreg® der Bayer AG) durch Sprühen belegt und imprägniert.

Ein Werkzeug (Stahl, 120°C, 300 x 300 x 8mm) wurde mit einer Deckschicht, die wie vorstehend beschrieben hergestellt wurde, einem Polyurethan-Kern, wie in Beispiel 2 beschrieben, und einer weiteren Deckschicht belegt und das Werkzeug geschlossen. Nach 2 Minuten bei 120°C und einem Druck von 50 bar wurde ein kraftschlüssiges Sandwichformteil entformt.

### Beispiel 3b

Wie unter Beispiel 3a) beschrieben, wurde ein erfindungsgemäßer Verbundkörper hergestellt, wobei zusätzlich auf eine der eingesetzten Deckschichten eine an sich bekannte Dekorfolie aus PVC/ABS gelegt wurde und das Werkzeug geschlossen wurde. Nach 2 Minuten bei 120°C und einem Druck von 50 bar wurde ein kraftschlüssiges Sandwichformteil mit zusätzlicher Dekorschicht entformt.

Alle erfindungsgemäß hergestellten Sandwichelemente zeigten bei guter Formbeständigkeit und Festigkeit einen sehr guten kraftschlüssigen Verbund zwischen Kern und Deckschicht.

## Patentansprüche

1. Verbundkörper mit einem Polyurethan-Kern und mindestens einer Deckschicht aus einem faserverstärkten Kunststoffmaterial. dadurch gekennzeichnet, daß er
a) einen Polyurethan-Kern aus der chemischen Umsetzung von Polyisocyanaten mit durch chemische Spaltung von Polyurethan- und/oder Polyharnstoffabfällen gewonnenen Polyolverbindungen mit einer OH-Zahl im Bereich von 100 bis 500 mg KOH/g, einem Wassergehalt von 0 bis 5 Gew.-% und einer Viskosität von mehr als 2 000 mPa·s (20°C) und
b) mindestens eine Deckschicht aus mit Naturfasern verstärkten Kunststoffmaterial enthält.

2. Verbundkörper gemäß Anspruch 1, dadurch gekennzeichnet, daß er eine Deckschicht aus mit Bananen-, Flachs-, Jute-, Hanf-, Sisal- und/oder Kokosfasern verstärkten Kunststoffmaterial enthält.

3. Verbundkörper gemäß Anspruch 1 oder 2, dadurch gekennzeichnet, daß er eine Deckschicht aus mit Naturfasern verstärkten Polyurethan enthält.

4. Verbundkörper gemäß einem der Ansprüche 1 bis 3, dadurch gekennzeichnet, daß er einen geschäumten Polyurethan-Kern enthält.

5. Verfahren zur Herstellung von Verbundkörpern mit einem Polyurethan-Kern und mindestens einer faserverstärkten Deckschicht durch Umsetzung von Polyisocyanaten mit Polyolverbindungen sowie gegebenenfalls weiteren Hilfs- und Zusatzstoffen, dadurch gekennzeichnet, daß man aus der chemischen Umsetzung von Polyisocyanaten mit durch chemische Spaltung von Polyurethan- und/oder Polyharnstoffabfällen gewonnenen Polyolverbindungen mit einer OH-Zahl im Bereich von 100 bis 500 KOH/g, einem Wassergehalt von 0 bis 5 Gew.-% und einer Viskosität von mehr als 2 000 mPa·s (20°C) zur Herstellung des Polyurethan-Kerns einsetzt und mindestens eine Deckschicht aus mit Naturfasern verstärkten Kunststoffmaterial in Sandwichbauweise auf diesen Polyurethan-Kern aufträgt..

6. Verfahren nach Anspruch 5, dadurch gekennzeichnet, daß durch Glykolyse von Polyurethan- und/oder Polyharnstoffabfällen gewonnene Polyolverbindungen eingesetzt werden.

7. Verwendung der Verbundkörper gemäß einem der Ansprüche 1 bis 4 im Fahrzeug-, Möbel-, Maschinen- oder Apparatebau.
